# EUROPÄISCHE PATENTSCHRIFT

(11) **EP 0 423 635 B1**
(45) Veröffentlichungstag und Bekanntmachung des Hinweises auf die Patenterteilung: **27.04.1994**
(21) Anmeldenummer: 90119580.0
(22) Anmeldetag: 12.10.1990
(51) Int. Cl.: C09D 9/00

(54) **Zusammensetzung eines Entlackungsmittels**
Paint removing composition
Composition de décapant

(30) Priorität: 17.10.1989 DE 3934551
(43) Veröffentlichungstag der Anmeldung: 24.04.1991
(73) Patentinhaber: CHEMISCHE WERKE KLUTHE GMBH & CO., D-69115 Heidelberg (DE)
(72) Erfinder: Petzold, Reinhard, Dr.-Ing.Dipl.-Chem., W-6838 Reilingen (DE)
(74) Vertreter: Grussdorf, Jürgen, Dr.

(56) Entgegenhaltungen:
- US-A- 2 710 843
- US-A- 3 615 827

## Beschreibung

Die Erfindung betrifft eine Zusammensetzung eines Entlackungsmittels, insbesondere für Metalle, auf der Basis von organischen Verbindungen.

Entlackungsmittel werden zum Lösen und Entfernen von Lacküberzügen beispielsweise auf Auto- und Maschinenteilen benötigt. Dabei wird in der Regel im Tauch- oder Spritzverfahren gearbeitet, wobei die Temperatur zwischen 20 und 120°C liegen kann. Bei unbeweglichen Teilen, die nicht durch vorgenannte Verfahren entlackt werden können, wird das eingedickte Entlackungsmittel aufgetragen und nach der Ablösung des Lackes mit ihm zusammen entfernt.

Einfache Entlacker auf anorganischer Basis sind Säuren und Laugen. Konzentrierte Schwefelsäure, beispielsweise, wird in der Regel kalt im Tauchverfahren eingesetzt. Die Entlackung hierbei ist sehr gut, aber die Nachteile dieser Arbeitsweise sind nicht nur die Gefahr eines Angriffs der Metalloberfläche und die gefährliche Ätzwirkung gegenüber Menschen und organischen Materialien, sondern auch die starke Aufsalzung nach Neutralisation des Abspritzwassers.

Wässrige Lösungen von Alkalihydroxiden und/oder alkalischen Salzen werden allein oder in Verbindung mit Lösungsmitteln, gegebenenfalls mit Lösungsvermittlern verwendet. Dabei wird in der Regel heiß gearbeitet. Alkalihydroxide bewirken eine rasche Auflösung alkalisch verseifbarer Lackbestandteile. Die Auswahl alkalibeständiger Lösemittel ist eng begrenzt. Das gern verwendete Lösungsmittel N-methylpyrrolidon scheidet hier wegen rascher Zersetzung aus.

Aus der DE-A 24 36 488 und der US 3,615,827 sind solche alkalischen Entlackungsmittel bekannt, die über 50 Gew.-% Alkalihydroxid und als organische Komponente bis zu 10 % ethoxylierte Alkohole (Polyethylenglykolmonoalkylether) und Di- bzw. Tripropylenglykol sowie ggf. Glykoldiether enthalten und bei Temperaturen von über 80 °C angewendet werden. Neben dem Nachteil, daß eine Entlackung für Leichtmetalle damit nicht möglich ist, erfordert dieses Verfahren einen zusätzlichen Energieaufwand für das Aufheizen und ist in seiner Wirkung nicht völlig befriedigend. Ferner findet auch hier nach Neutralisation eine hohe Aufsalzung des Abspritzwassers statt.

Aus der US-P 2,710,843 sind Mittel zum Entfernen von Siloxanharzen bekannt, welche aus einer Lösung von Alkalihydroxid in Polyglykolmonoalkylethern bestehen. Diese Mittel hydrolysieren die Siloxanharze, ohne die Zinnunterlage anzugreifen.

Schließlich sind auch Entlacker auf Lösungsmittelbasis, ohne Wasserzusatz, bekannt, mit denen im Tauch-, Spritz- und/oder Auftragsverfahren gearbeitet wird. Die Arbeitstemperaturen liegen zwischen 20° und 90° C. Sie basieren auf N-Methylpyrrolidon (NMP) in Kombination mit Glykolmonoethern, Aromaten, Estern und schwachen Alkalien oder Säuren. Solche Entlackungsmittel haben gewisse Vorteile gegenüber Säure- und Alkalizusammensetzungen, denn sie sind auch für Leichtmetalle geeignet und biologisch abbaubar, ohne die nachteilige Aufsalzung des Abwassers. Der Nachteil ist, daß je nach Lösungsmittelbasis im allgemeinen Kunststoffe gelöst oder angequollen werden. Bekannte Vertreter für Lösungsmittelentlacker haben auch Nachteile.

So beispielsweise sind N-Methylpyrrolidon (NMP) sowie Ester gegenüber starken Säuren und Laugen instabil, da sie verseift werden.

Glykolmonoether und aromatische Kohlenwasserstoffe, wie sie ebenfalls allgemein verwendet werden, zeigen häufig eine zu geringe Entlackungswirkung. Außerdem sind Ester und aromatische Kohlenwasserstoffe in der Regel leicht entzündliche Substanzen. Aromatische und aliphatische Kohlenwasserstoffe sind darüber hinaus biologisch schwer abbaubar.

Aus der DE-A 35 34 278 sind Abbeizpasten für Lackschichten bekannt, bei denen ein Lösungsmittelgemisch aus Diethylenglykolmonoalkylether und Wasser mit Fettsäuresalzen als Verdickungsmittel verwendet wird. In geringer Menge (5-10 %) können auch andere Lösungsmittel wie Diethylenglykolmonoalkyletheracetate oder -propionate oder auch Diethylenglykoldiether vorhanden sein; größere Mengen dieser Zusätze stören die Abbeizwirkung. Nachteilig ist die relativ lange Zeit von ca. 10 Stunden, die für die Lackentfernung benötigt wird.

Aufgabe der Erfindung ist es, eine Zusammensetzung eines Entlackungsmittels zu schaffen, die gegenüber Säuren und Alkalien stabil ist, biologisch leicht abbaubar ist, keine hohen Mineralsalzmengen ergibt und die eine guten Entlackung auch beim Kaltverfahren in kurzen Zeiten sicherstellt.

Diese Aufgabe wird durch eine Zusammensetzung, wie sie in den Ansprüchen näher beschrieben ist, gelöst.

Die erfindungsgemäße Zusammensetzung enthält mindestens einen vollveretherten mehrwertigen Alkohol in Kombination mit anorganischen und/oder organischen Alkalien oder schwachen Säuren sowie lösungsvermittelnde Zusätze.

Zweckmäßige Weiterbildungen der Zusammensetzung sind in den Unteransprüchen gekennzeichnet.

Es wurde gefunden, daß eine Zusammensetzung mit einem Hauptanteil vollveretherter mehrwertiger Alkohole ein gutes, auch im Kaltverfahren schnell wirkendes Entlackungsmittel ist, mit dem je nach Konsistenz nach der Tauch-, Spritz- oder Auftragsmethode gearbeitet werden kann.

Vollveretherte mehrwertige Alkohole im Sinne der Erfindung, die den Hauptanteil, vorzugsweise 50-95 % der Zusammensetzung ausmachen, sind insbesondere Glykol, Propylenglykol und Glycerin und daraus erhältliche Polymere, deren freie OH-Gruppen durch lineare oder verzweigte Alkylalkohole mit 1-20 C-Atomen, vorzugsweise 1-10 C-Atomen, und insbesondere Methyl-, Ethyl- oder Propylalkohole verethert sind. Die Polyglykole besitzen 2-100, insbesondere 2-5 Glykoleinheiten, wobei Di- und Triethylenglykole bevorzugt sind. Diese bevorzugten Verbindungen entsprechen der allgemeinen Formel 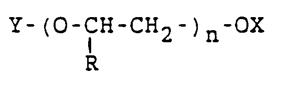
worin
- R: Wasserstoff, Methyl- oder Ethyl-;
- X und Y: Alkyl- mit 1-10, insbesondere 1-4 C-Atomen, bevorzugt Methyl- oder Ethyl, Benzyl- oder Phenyl-; und
- n: eine ganze Zahl von 1 bis 100, vorzugsweise 1-10 und insbesondere 1-5
bedeuten.

Als anorganische Basen sind insbesondere Natrium, Kalium und Calciumhydroxid zu nennen. Unter organischen Basen sind insbesondere Alkali- und Erdalkalialkoholate, aber auch starke Stickstoffbasen, wie Alkanolamine und quartäre Ammoniumhydroxide zu verstehen. Die Basen sind in einer Menge von 0,5-10 Gew.-% enthalten, wobei bei den sehr starken organischen Basen, Alkoholaten und quartären Ammoniumverbindungen Mengen von 0,5-5 %, vorzugsweise 1-2 %, angewendet werden und die schwächeren organischen in Mengen von 1-10 %, vorzugsweise 2-5 %, eingesetzt werden, um die Zusammensetzung ausreichend alkalisch einzustellen. Alternativ ist Ameisensäure in einer Menge von 15 % enthalten.

Um die Löslichkeit der Alkalien in den vollveretherten Alkoholen zu erhöhen und die Benetzung der Lackpartikel bzw. der zu reinigenden Flächen zu verbessern, können lösungsvermittelnde Zusätze, wie nicht oder teilweise veretherte mehrwertige Alkohole, wie Glykol, Glycerin, Polyglykol oder Polyvinylalkohole, Benzoate, aliphatische und/oder aromatische Alkohole oder Tenside, vorzugsweise kationische, nichtionische oder anionische Tenside oder Seifen allein oder in Kombination zugesetzt werden. Die Lösungsmittel können dabei bis zu 40 %, vorzugsweise 5-20 % der Zusammensetzung betragen, die Tenside können in bis zu 5 %, vorzugsweise 0,5-2 % zugesetzt werden.

Die Erfindung wird anhand einiger Ausführungsbeispiele näher erläutert.

Als Prüfstück wurde ein Aluminiumblech verwendet, das mit Polyesterpulver der Firma Ruhr-Pulverlack GmbH, Arnsberg beschichtet war. Der Lacktyp war Galinit grau, Schichtstärke 50 µm eingebrannt bei 200° C und 15 Minuten.

Die Mengenangaben sind Massenprozente.

Die Bestandteile wurden einfach miteinander gemischt.

### Beispiel 1

60 % Diethylenglykoldimethylether, 18 % Methanol 2 % Natriumhydroxid und 20 % Methyldiglykol wurden miteinander gemischt.
Das Prüfblech wurde bei 20°C in das Entlackungsbad eingetaucht. Nach 6 Minuten war der Lack gelöst und es verblieb auf dem Blech ein minimaler Rest an Pigmentschmutz, der sich leicht abwaschen ließ.

### Beispiel 2

60 % Triethylenglykoldimethylether, 2 % Natriummethanolat und 38 % Methyldiglykol
wurden miteinander gemischt.
Das Prüfblech wurde in das Entlackungsbad getaucht. Bei einer Arbeitstemperatur von 85 bis 90° C betrug die Entlackungszeit 1 Minute. Auch hier blieb auf dem Blech nur ein minimaler Rest an Pigmentschmutz haften, der sich leicht abwaschen ließ

### Beispiel 3

60 % Diethylenglykoldibutylether, 2 % Natriummethanolat und 38 % Methyldiglykol
wurden miteinander gemischt.
Das Prüfblech wurde in das Entlackungsbad bei einer Temperatur zwischen 85 und 90° C getaucht und nach 2 Minuten war der Lack hautförmig gelöst, konnte aber nur durch Abspritzen entfernt werden.

### Beispiel 4

50 % Diethylenglykoldimethylether, 15 % Ameisensäure 99%, 35 % Methyldiglykol
wurden miteiander gemischt.

Das Prüfblech, das mit Epoxid/Polyesterpulver 90 : 10 der Firma Ruhr-Pulverlack GmbH, Arnsberg, bei 200° C und 16 Minuten eingebrannt,lackiert war, wurde in das Entlackungsbad bei Zimmertemperatur getaucht. Der Lack löste sich hautfömig innerhalb 25 Minuten ab.

In allen vier Fällen zeigte sich keine negative Wirkung auf das Aluminium des Prüfbleches.

## Patentansprüche

1. Zusammmensetzung eines Entlackungsmittels, insbesondere für Metalle, auf der Basis von organischen Verbindungen, enthaltend
a) 50 - 95 Gew.-% an mindestens einen vollveretherten mehrwertigen Alkohol
b) 0,5 - 10 Gew.-% starke anorganische und/oder organische Basen oder 15 Gew.-% Ameisensäure sowie
c) lösungsvermittelnde Zusätze in Form von bis zu 40 Gew.-% Lösungsmitteln und/oder bis zu 5 Gew.-% Tensiden

2. Zusammensetzung nach Anspruch 1, dadurch gekennzeichnet, daß der vollveretherte mehrwertige Alkohol ein Polyalkylenglykoldiether der allgemeinen Formel 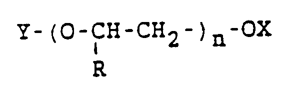 worin
R Wasserstoff, Methyl- oder Ethyl-;
X und Y Alkyl- mit 1-10, insbesondere 1-4 C-Atomen, bevorzugt Methyl- oder Ethyl, Benzyl- oder Phenyl-; und
n eine ganze Zahl von 1 bis 100, vorzugsweise 1-10 und insbesondere 1-5
bedeuten.

3. Zusammensetzung nach Anspruch 2, dadurch gekennzeichnet, daß x und y je ein Methylrest ist.

4. Zusammensetzung nach Anspruch 1, dadurch gekennzeichnet, daß als Alkalien Hydroxide und/oder Alkoholate von Elementen der 1. oder 2. Hauptgruppe zugesetzt sind.

5. Zusammensetzung nach Anspruch 1, dadurch gekennzeichnet, daß als Lösungsvermittler Polyalkylenglykole und/oder deren Monoether, Polyvinylalkohole, Benzoate, aliphatische und/oder aromatische Alkohole in einer Menge von 5 - 20 gew.-% oder Tenside einschließlich Seifen in einer Menge von 0,5 - 2 Gew.-%, allein oder in Kombination zusetzt sind.

## Claims

1. Composition of a paint-removing agent, especially for metals, based on organic compounds, containing
a) 50 - 95 wt.% of at least one fully etherified polyhydroxy alcohol,
b) 0.5 - 10 wt.% of strong inorganic and/or organic bases or 15 wt.% of formic acid, as well as
c) solubilising additives in the form of up to 40 wt.% of solvents and/or up to 5 wt.% of tensides.

2. Composition according to claim 1, characterised in that the fully etherified polyhydroxy alcohol is a polyalkylene glycol diether of the general formula 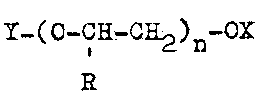 wherein R signifies hydrogen, methyl or ethyl, X and Y alkyl with 1 - 10, especially 1 - 4 C-atoms, preferably methyl or ethyl, benzyl or phenyl; and n a whole number of 1 to 100, preferably 1 - 10 and especially 1 - 5.

3. Composition according to claim 2, characterised in that X and Y is, in each case, a methyl radical.

4. Composition according to claim 1, characterised in that hydroxides and/or alcoholates of elements of the 1st or 2nd Main Group are used as alkalies.

5. Composition according to claim 1, characterised in that, as solubilising agents, there are added polyalkylene glycols and/or their monoethers, polyvinyl alcohols, benzoates, aliphatic and/or aromatic alcohols in an amount of 5 - 20 wt.% or tensides, including soaps, in an amount of 0.5 - 2 wt.%, alone or in combination.

## Revendications

1. Composition d'un décapant, en particulier pour des métaux, à base de composés organiques, contenant
a) 50 à 95 % en poids d'au moins un polyalcool complètement éthérifié,
b) 0,5 à 10 % en poids de bases fortes inorganiques et/ou organiques ou 15 % en poids d'acide formique, ainsi que
c) des additifs solubilisants sous la forme de jusqu'à 40 % en poids de solvants et/ou jusqu'à 5 % en poids d'agents tensio-actifs.

2. Composition suivant la revendication 1, caractérisée en ce que le polyalcool complètement éthérifié est un diéther de polyalkylèneglycol répondant à la formule générale 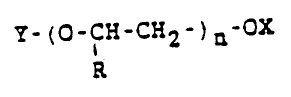 dans laquelle R représente de l'hydrogène, un méthyle ou un éthyle,
X et Y représentent un alkyle comportant 1 à 10, en particulier 1 à 4, atomes de C, de préférence un méthyle ou un éthyle, un benzyle ou un phényle, et
n représente un nombre entier de 1 à 100, de préférence de 1 à 10, et en particulier de 1 à 5.

3. Composition suivant la revendication 2, caractérisée en ce que X et Y représentent chacun un radical méthyle.

4. Composition suivant la revendication 1, caractérisée en ce que, comme alcalis, on ajoute des hydroxydes et/ou des alcoolates d'éléments du groupe principal I ou II.

5. Composition suivant la revendication 1, caractérisée en ce que, comme tiers-solvants, on ajoute des polyalkylèneglycols et/ou leurs monoéthers, des alcools polyvinyliques, des benzoates, des alcools aliphatiques et/ou aromatiques, en une quantité de 5 à 20 % en poids, ou des agents tensio-actifs, y compris des savons, en une quantité de 0,5 à 2 % en poids, seuls ou en combinaison.
